# EUROPÄISCHE PATENTSCHRIFT

(11) **EP 3 379 226 B1**
(45) Veröffentlichungstag und Bekanntmachung des Hinweises auf die Patenterteilung: **10.03.2021**
(21) Anmeldenummer: 18153259.9
(22) Anmeldetag: 24.01.2018
(51) Int. Cl.: G01M 17/007

(54) **VERFAHREN ZUM ERKENNEN EINES SONDERBETRIEBSZUSTANDS EINES KRAFTFAHRZEUGS, MOBILE VORRICHTUNG UND COMPUTERPROGRAMMPRODUKT**
METHOD FOR DETERMINING A SPECIAL OPERATING CONDITION OF A MOTOR VEHICLE, MOBILE DEVICE AND COMPUTER PROGRAM PRODUCT
PROCÉDÉ DE DÉTERMINATION D'UN ÉTAT DE FONCTIONNEMENT SPÉCIAL D'UN VÉHICULE À MOTEUR, DISPOSITIF MOBILE ET PRODUIT DE PROGRAMME INFORMATIQUE

(30) Priorität: 23.03.2017 DE 102017204941
(43) Veröffentlichungstag der Anmeldung: 26.09.2018
(73) Patentinhaber: Vitesco Technologies GmbH, 30165 Hannover (DE)
(72) Erfinder: Bruns, Carsten, 93055 Regensburg (DE)

(56) Entgegenhaltungen:
- DE-A1-102015 207 486
- US-A1- 2015 057 976

## Beschreibung

Die Erfindung betrifft ein Verfahren zum Erkennen eines von einem Normalbetriebszustand eines Kraftfahrzeugs abweichenden Sonderbetriebszustands des Kraftfahrzeugs. Weiterhin betrifft die Erfindung eine mobile Vorrichtung zum Erkennen eines von einen Normalbetriebszustand eines Kraftfahrzeugs abweichenden Sonderbetriebszustands des Kraftfahrzeugs. Die Erfindung betrifft auch ein Computerprogrammprodukt mit von einem Computersystem ausführbaren Instruktionen zur Durchführung eines dementsprechenden Verfahrens sowie eine Referenzgeräuschsammlung.

In diesem Zusammenhang ist bekannt, dass bei einer Qualitätskontrolle an einem Montagebandende einer Fahrzeugproduktion, wie auch bei einer Überwachung von Motorprüfständen, akustische oder schwingungsbasierte Überwachungen angewendet werden, um Fehler frühzeitig zu erkennen

Im Stand der Technik sind aus US 2015/057976 A1 und DE 10 2015 207486 A1 typische Verfahren und Vorrichtung zum Erkennen eines von einem Normalbetriebszustand eines Kraftfahrzeugs abweichenden Sonderbetriebszustands des Kraftfahrzeugs bekannt.

Vorliegend gilt das Interesse nun dem Erkennen eines Sonderbetriebszustands eines Kraftfahrzeugs. Der Sonderbetriebszustand ist dabei unterschiedlich von einem Normalbetriebszustand des Kraftfahrzeugs und kann beispielsweise durch eine defekte Komponente des Kraftfahrzeugs vorliegen.

Es ist eine Aufgabe, ein Verfahren, eine mobile Vorrichtung, ein Computerprogrammprodukt und eine Referenzgeräuschsammlung zu schaffen, bei welchem bzw. mit welchem ein Sonderbetriebszustand eines Kraftfahrzeugs genauer erkannt werden kann.

Diese Aufgabe wird durch ein Verfahren, eine mobile Vorrichtung und ein Computerprogrammprodukt gemäß den unabhängigen Ansprüchen gelöst.

Bei einem erfindungsgemäßen Verfahren wird ein von einem Normalbetriebszustand eines Kraftfahrzeugs abweichender Sonderbetriebszustand des Kraftfahrzeugs erkannt. Es wird ein während des Betriebs des Kraftfahrzeugs vom Kraftfahrzeug abgegebenes Geräusch im Innenraum des Kraftfahrzeugs mit einer vom Kraftfahrzeug separaten mobilen Vorrichtung erfasst. Das Geräusch wird mit einer Mehrzahl von durch die mobile Vorrichtung bereitgestellten Referenzgeräusche verglichen. Weiterhin wird das Geräusch bei Überschreiten eines Mindestähnlichkeitswerts einem ähnlichsten Referenzgeräusch der Mehrzahl der Referenzgeräusche anhand des Vergleichs zugeordnet. Durch die erfolgte Zuordnung wird der Sonderbetriebszustand erkannt. Der Vorgehensweise liegt die Erkenntnis zugrunde, dass sich ein Sonderbetriebszustand des Kraftfahrzeugs, beispielsweise eine Fahrt des Kraftfahrzeugs mit defektem Radlager, durch ein unverkennbares und eindeutig zuordenbares Geräusch auszeichnet, wodurch der Sonderbetriebszustand nach einmaliger Zuordnung zu diesem Geräusch wieder erkannt werden kann.

Der Normalbetriebszustand ist insbesondere ein Zustand des Kraftfahrzeugs, in welchem sämtliche, insbesondere Geräusch erzeugende, Komponenten des Kraftfahrzeugs ordnungsgemäß funktionieren. In dem Normalbetriebszustand liegt also insbesondere keine defekte Komponente vor. Im Sonderbetriebszustand hingegen liegt eine, insbesondere Geräusch erzeugende, defekte Komponente des Kraftfahrzeugs vor. Es kann beispielsweise auch der Fall sein, dass die Komponente das Geräusch erst erzeugt, wenn diese defekt ist und im nicht defekten Zustand geräuschlos betrieben wird. Es kann aber auch sein, dass sich das Geräusch der Komponente vom ordnungsgemäßen Betrieb hin zum defekten bzw. beschädigten Betrieb verändert. Die Veränderung kann beispielsweise durch Ändern des Spektrums der Frequenz und/oder Ändern der Lautstärke des Geräusches erfolgen.

Das Geräusch ist im Innenraum des Kraftfahrzeugs erfassbar. Das Geräusch ist ein Luftschallsignal und insbesondere kein Körperschallsignal. Der Innenraum des Kraftfahrzeugs ist insbesondere eine Fahrgastzelle des Kraftfahrzeugs, also der Bereich des Innenraums, in welchem sich ein Fahrzeuginsasse aufhält.

Das Geräusch wird mit der mobilen Vorrichtung erfasst. Die mobile Vorrichtung ist vorzugsweise ein Mobiltelefon, ein Smartphone, ein Tablet oder ein tragbarer Computer. Die mobile Vorrichtung ist separat zu dem Kraftfahrzeug ausgebildet, das heißt die mobile Vorrichtung kann ohne weiteres aus dem Innenraum des Kraftfahrzeugs entfernt werden und an einen anderen Ort gebracht werden. Weiterhin ist es insbesondere vorgesehen, dass die mobile Vorrichtung innerhalb des Innenraums frei bewegt werden kann und beispielsweise von einem Fahrzeuginsassen zu einem anderen Fahrzeuginsassen weitergegeben werden kann. Insbesondere kann die mobile Vorrichtung aber auch an einer in dem Innenraum des Kraftfahrzeugs zu diesem Zweck vorgesehenen Halterung fixiert werden. Die mobile Vorrichtung verfügt insbesondere über ein Mikrofon, um das Geräusch zu erfassen.

Das erfasste Geräusch wird mit der Mehrzahl von Referenzgeräuschen verglichen. Die Referenzgeräusche sind dabei, insbesondere im Voraus, aufgezeichnete Geräusche, welchen jeweils zumindest ein Sonderbetriebszustand zugeordnet ist. Die Referenzgeräusche werden durch die mobile Vorrichtung bereitgestellt, das bedeutet insbesondere, dass die mobile Vorrichtung einen Zugriff auf eine Datenbank bzw. eine Referenzgeräuschsammlung hat, in welcher die Mehrzahl der Referenzgeräusche vorgehalten wird. Die Referenzgeräuschsammlung kann dann beispielsweise in der mobilen Vorrichtung abgespeichert sein oder aber auf einem, insbesondere drahtlos, mit der mobilen Vorrichtung gekoppelten Server, welcher kraftfahrzeugextern oder kraftfahrzeugintern ausgebildet sein kann, abgespeichert sein. Im letztgenannten Fall überträgt die mobile Einrichtung das Geräusch an den Server. Dieser kann den Vergleich durchführen. Bei Überschreiten des Mindestähnlichkeitswerts wird davon ausgegangen, dass ein Sonderbetriebszustand vorliegt und kein Normalbetriebszustand. Wird der Mindestähnlichkeitswert nicht überschritten, so wird insbesondere davon ausgegangen, dass das Kraftfahrzeug in dem Normalbetriebszustand betrieben wird und insbesondere keine defekte Komponente vorliegt. Der Mindestähnlichkeitswert wird insbesondere dann nicht überschritten, wenn die Zuordnung des Geräuschs zu einem der Referenzgeräusche nicht mit ausreichend hoher Ähnlichkeit erfolgt.

Erfindungsgemäß ist es vorgesehen, dass eine defekte Komponente des Kraftfahrzeugs mittels einer vorgegebenen Zuordnung zwischen der defekten Komponente und der Mehrzahl der Referenzgeräusche bestimmt wird. Allgemein liegt die Zuordnung also zwischen Komponente und Referenzgeräusch vor. Sofern der Sonderbetriebszustand erkannt wird, also erkannt wird, dass das Kraftfahrzeug nicht im Normalbetriebszustand betrieben wird, also ein Defekt vorliegt, wird eine defekte Komponente oder mehrere defekte Komponenten des Kraftfahrzeugs bestimmt, basierend auf der Zuordnung. Durch das Bestimmen der defekten Komponente kann beispielsweise eine Identifikation, insbesondere eine Teilenummer für ein Ersatzteil des Kraftfahrzeugs bestimmt werden. Die defekte Komponente kann dabei beispielsweise eine Bauteilgruppe sein, die ein Radlager, ein Kühlerlüfter oder die Hauptantriebseinheit umfasst. Die defekte Komponente kann aber auch bereits dem konkreten Ersatzteil entsprechen. So kann die defekte Komponente beispielsweise ein Dichtungsring, eine Halteschelle oder ein Kugellager bezeichnen. Durch das Bestimmen der defekten Komponente kann dann beispielsweise gleich eine Abschätzung der Ersatzteilkosten und/oder der Gesamtreparaturkosten inklusive des Arbeitsaufwands erfolgen. Die Kosten können durch die Zuordnung dem jeweiligen Referenzgeräusch zugeordnet sein. Auch kann beispielsweise die Bestellung eines Ersatzteils für die defekte Komponente bereits vorbereitet werden und einem Benutzer der mobilen Vorrichtung vorgeschlagen werden oder sofort nach dem Bestimmen der defekten Komponente automatisch in Auftrag gegeben werden.

Weiterhin ist es vorzugsweise vorgesehen, dass zumindest ein Zustand des Kraftfahrzeugs anhand eines Kommunikationsbus des Kraftfahrzeugs bestimmt wird und die Mehrzahl der durch die mobile Vorrichtung bereitgestellten Referenzgeräusche abhängig von einer Zuordnung zwischen dem Zustand und der Mehrzahl der Referenzgeräusche ausgewählt wird. Der Zustand, welcher anhand des Kommunikationsbus bestimmt wird, kann beispielsweise ein Geschwindigkeitswert, ein Beschleunigungswert, insbesondere ein Wert einer lateralen Beschleunigung, ein Neigungswinkel, eine Betriebsdauer oder ein Reifendruckwert des Kraftfahrzeugs sein. Der Kommunikationsbus des Kraftfahrzeugs ist beispielsweise ein CAN-Bus (Controller Area Network), ein Ethernet oder ein LIN-Bus (Local Interconnect Network). Der Kommunikationsbus ist dann beispielsweise mit vielfältigen Sensoren des Kraftfahrzeugs verbunden. Durch den Zustand des Kraftfahrzeugs kann die Mehrzahl der Referenzgeräusche individueller an die aktuelle Situation während der Geräuscherfassung angepasst werden und die Zuordnung des Geräuschs zu den Referenzgeräuschen erfolgt genauer.

Weiterhin ist es vorzugsweise vorgesehen, dass das Geräusch von einem den Normalbetriebszustand charakterisierenden Normalgeräusch bereinigt wird und das bereinigte Geräusch mit der Mehrzahl der Referenzgeräusche verglichen wird. Durch das Bereinigen des Geräusches kann die Zuordnung des Geräusches zu der Mehrzahl der Referenzgeräusche genauer und zuverlässiger erfolgen. Das Normalgeräusch kann beispielsweise zu einem Zeitpunkt erfasst werden, zu welchem sich das Kraftfahrzeug erwiesenermaßen im Normalbetriebszustand befindet. Das Normalgeräusch kann beispielsweise für vielfältige Zustände des Kraftfahrzeugs bereitgestellt werden. Die Bereitstellung des Normalgeräusches kann beispielsweise durch einen Hersteller des Kraftfahrzeugs oder aber die Werkstatt des Kraftfahrzeugs oder aber durch den Nutzer der mobilen Vorrichtung selbst erfolgen, indem das Normalgeräusch während des Normalbetriebszustands des Kraftfahrzeugs mit der mobilen Vorrichtung aufgezeichnet wird.

Weiterhin ist es vorzugsweise vorgesehen, dass eine Position der mobilen Vorrichtung im Innenraum relativ zum Kraftfahrzeug bestimmt wird und eine Entfernung der Quelle des Geräusches zur Position der mobilen Vorrichtung bestimmt wird und/oder eine Ausrichtung der Quelle des Geräusches relativ zur mobilen Vorrichtung im Innenraum bestimmt wird, und abhängig von der Entfernung und/oder der Ausrichtung eine Position der Quelle bestimmt wird, wobei das Geräusch der Mehrzahl der Referenzgeräusche abhängig von der Position der Quelle zum Kraftfahrzeug zugeordnet wird. Durch das Bestimmen der Position der mobilen Vorrichtung im Innenraum wird bestimmt wo sich die mobile Vorrichtung während der Aufnahme des Geräusches befindet. Zudem wird vorzugsweise eine Entfernung der Quelle des Geräusches zur Position bestimmt. Abhängig von der Position und der Entfernung kann die Zuordnung des Geräusches zu den Referenzgeräuschen zuverlässiger und präziser erfolgen. So kann anhand der Position und Entfernung eine Auswahl von Referenzgeräuschen getroffen werden, welche für das Geräusch in Betracht kommen. So kann beispielsweise um die Position herum ein Radius mit der Entfernung gezogen werden und nur die Komponenten des Kraftfahrzeugs, welche von dem Radius und gegebenenfalls einem Toleranzbereich des Radius erfasst werden, werden dann auch bei den für den Vergleich bereitgestellten Referenzgeräuschen berücksichtigt. Ergänzend oder alternativ kann auch die Ausrichtung der Quelle des Geräusches relativ zur mobilen Vorrichtung bestimmt werden. Durch die Ausrichtung kann dann beispielsweise die Information berücksichtigt werden, dass das Geräusch aus einem hinteren linken Bereich des Kraftfahrzeugs abgegeben wird. Die Position der Quelle ist dabei insbesondere eine Positionsschätzung bzw. ein Positionsbereich, also ein Bereich des Kraftfahrzeugs, in welchem die Quelle des Geräuschs angeordnet ist. Vorzugsweise werden dann bei der Zuordnung des Geräusches zur Mehrzahl der Referenzgeräusche nur die Referenzgeräusche berücksichtigt, welche an der Position bzw. im Positionsbereich der Quelle über eine positionelle Zuordnung mit Bereichen des Kraftfahrzeugs zugeordnet sind. So kann dem Referenzgeräusch eines defekten Radlagers beispielsweise der Bereich der Radanordnungen am Kraftfahrzeug zugewiesen sein, also beispielsweise vorne links, vorne rechts, hinten links und hinten rechts, während in der Fahrzeugmitte kein Referenzgeräusch einem defekten Radlager zugewiesen ist. Wird nun die Quelle des Geräusches beispielsweise in der Fahrzeugmitte bestimmt, so wird das Geräusch auch nicht mit den Referenzgeräuschen des kaputten Radlagers verglichen. Eine Fehlzuordnung zu einem unzutreffenden Referenzgeräusch kann dadurch verhindert werden und die Erkennung des Sonderbetriebszustands wird dadurch zuverlässiger ausgeführt. Vorzugsweise ist jedem Referenzgeräusch eine Position im Kraftfahrzeug zugeordnet. Die Position kann dabei beispielsweise lediglich zweidimensional in der Fahrbahnebene oder aber in einem dreidimensionalen Raum vorliegen.

Weiterhin ist es vorzugsweise vorgesehen, dass ein aktueller Beschleunigungswert der mobilen Vorrichtung während des Erfassens des Geräusches erfasst wird und das Geräusch abhängig von dem aktuellen Beschleunigungswert zu der Mehrzahl der Referenzgeräusche zugeordnet wird. Der aktuelle Beschleunigungswert wird dabei insbesondere mit einem Beschleunigungssensor der mobilen Vorrichtung erfasst. Durch das Erfassen des Beschleunigungswerts der mobilen Vorrichtung kann ein Abgreifen des Beschleunigungswerts über den Kommunikationsbus des Kraftfahrzeugs entbehrlich werden. So kann die Beschleunigung der mobilen Vorrichtung beispielsweise auch dann schon berücksichtigt werden, wenn zwischen der mobilen Vorrichtung und dem Kraftfahrzeug keine Kopplung, beispielsweise drahtlos, vorliegt. Ergänzend oder alternativ kann beispielsweise auch ein relativer Beschleunigungswert zwischen der Beschleunigung der mobilen Vorrichtung und einer Beschleunigung des Kraftfahrzeugs bestimmt werden. Der Beschleunigungswert der mobilen Vorrichtung kann dabei von dem Beschleunigungswert des Kraftfahrzeugs abweichen, falls die mobile Vorrichtung während des Erfassens des Geräusches im Innenraum bewegt wird. Dies kann dann ebenfalls bei der Zuordnung des Geräusches zu der Mehrzahl der Referenzgeräusche berücksichtigt werden. Den Referenzgeräuschen sind dabei verschiedene vorbekannte Beschleunigungswerte der mobilen Vorrichtung zugeordnet. Die Zuordnung ist insbesondere in der Referenzgeräuschsammlung beziehungsweise einer Datenbank angelegt. Die Relativbeschleunigung kann auch deswegen von Interesse sein, da sich ein Geräusch bei Bewegen des Mikrofons der mobilen Vorrichtung auf die Quelle des Geräusches zu oder von der Quelle des Geräusches weg verändert bzw. hochfrequenter oder niederfrequenter wird. Dieser Effekt kann durch die bestimmte Relativbeschleunigung berücksichtigt werden.

Weiterhin ist es vorzugsweise vorgesehen, dass eine aktuelle Umgebungssituation des Kraftfahrzeugs während des Erfassens des Geräusches erfasst wird und das Geräusch der Mehrzahl der Referenzgeräusche abhängig von der aktuelle Umgebungssituation zugeordnet wird. Den Referenzgeräuschen sind dabei verschiedene vorbekannte Umgebungssituationen zugeordnet. Die Zuordnung ist insbesondere in der Referenzgeräuschsammlung beziehungsweise einer Datenbank angelegt. Die aktuelle Umgebungssituation wird dabei beispielsweise durch Umgebungssensoren des Kraftfahrzeugs erfasst. Die aktuelle Umgebungssituation kann aber auch von einem weiteren Kraftfahrzeug in einem Umgebungsbereich des Kraftfahrzeugs erfasst werden und dann, vorzugsweise drahtlos, an das Kraftfahrzeug übermittelt werden, beispielsweise nach dem Prinzip der Car-to-X Kommunikation. Durch die aktuelle Umgebungssituation kann das Geräusch der Mehrzahl der Referenzgeräusche präziser und zuverlässiger zugeordnet werden. So kann die aktuelle Umgebungssituation beispielsweise ergeben, dass Regentropfen auf das Kraftfahrzeug fallen oder aber das Kraftfahrzeug auf einer nassen Fahrbahn fährt und sich dadurch ein charakteristisches Fahrgeräusch ergibt, oder aber dass Störgeräusche von außen eingetragen werden, beispielsweise wenn das Fahrzeug sich in zähflüssigem Verkehr oder einem Stau befindet und neben dem Kraftfahrzeug beispielsweise ein Lastkraftwagen mit lauten Motorengeräuschen betrieben wird. Abhängig von der aktuellen Umgebungssituation können dann insbesondere bestimmte Referenzgeräusche der Mehrzahl der Referenzgeräusche für die Zuordnung des Geräusches ausgewählt werden. Die aktuelle Umgebungssituation kann aber beispielsweise auch zur Bestimmung des Normalgeräusches genutzt werden.

Weiterhin ist es erfindungsgemäß vorgesehen, dass ein Werkstattvorschlag für das Kraftfahrzeug mittels einer Zuordnung zwischen dem Werkstattvorschlag und der Mehrzahl der Referenzgeräusche bestimmt wird, und insbesondere der Werkstattvorschlag durch die mobile Vorrichtung ausgegeben wird. So kann dem ähnlichsten Referenzgeräusch beispielsweise zugeordnet sein, welche Werkstatt für diese Art von Schaden besonderes Fachwissen aufweist. Einbezogen in den Werkstattvorschlag kann beispielsweise ein Ort der Werkstatt, welcher beispielsweise einer aktuellen Position des Kraftfahrzeugs naheliegt und/oder eine Bezeichnung der Werkstatt sein. Anhand des erkannten Sonderbetriebszustands bzw. der defekten Komponente kann dann beispielsweise abgeschätzt werden, wie lange das Kraftfahrzeug noch bedenkenlos betrieben werden kann, um zu der durch den Werkstattvorschlag vorgeschlagenen Werkstatt zu gelangen. So kann beispielsweise eine Abwägung erfolgen, zwischen einer nahegelegenen Werkstatt und einer entfernteren Werkstatt, welche aber über erhöhte Reparaturerfahrung bezüglich der defekten Komponente verfügt. Der Werkstattvorschlag enthält somit Reparaturerfahrung und/oder Information, ob ein Ersatzteil für die defekte Komponente vorliegt. Weiterhin kann beispielsweise beim Werkstattvorschlag berücksichtigt werden, welchen Fahrzeugtyp bzw. welchen Fahrzeugfabrikat das Kraftfahrzeug zugehörig ist. So kann der Fahrzeugtyp beispielsweise in die mobile Vorrichtung eingegeben werden, beispielsweise durch ein Funksignal oder aber durch eine Bildaufnahme, welche mit der mobilen Vorrichtung von dem Kraftfahrzeug gemacht wird. Der Fahrzeugtyp kann aber auch beispielsweise über den Kommunikationsbus des Kraftfahrzeugs übertragen werden. Durch den Werkstattvorschlag wird dem Nutzer der mobilen Vorrichtung ein schneller Weg aufgezeigt, um den Sonderbetriebszustand wieder zu beenden.

Weiterhin ist es vorzugsweise vorgesehen, dass das Geräusch, insbesondere zusammen mit Betriebsinformationen des Kraftfahrzeugs, durch die mobile Vorrichtung aufgezeichnet wird und als ein Referenzgeräusch der Mehrzahl der Referenzgeräusche bereitgestellt wird. Durch das Aufzeichnen des Geräusches kann der Nutzer der mobilen Vorrichtung die Mehrzahl der Referenzgeräusche bzw. eine Datenbank in der die Referenzgeräusche gespeichert sind, erweitern. Dadurch kann der Nutzer beispielsweise Geräusche, die ein weiteres Mal auftreten, präziser und zuverlässiger den Referenzgeräuschen zuordnen. Die mobile Vorrichtung kann aber beispielsweise auch das Geräusch aufzeichnen und als Normalgeräusch klassifizieren. Für diesen Fall wird dieses Geräusch bei der nächsten Anwendung der mobilen Vorrichtung nicht mehr den Referenzgeräuschen zugeordnet und es ist wird kein, möglicherweise falscher, Sonderbetriebszustand erkannt. Das aufgezeichnete Geräusch kann dann beispielsweise von dem Nutzer der mobilen Vorrichtung oder aber einer Werkstatt, welche die Reparatur durchführt, klassifiziert werden, also insbesondere einer defekten Komponente des Kraftfahrzeugs zugeordnet werden. Vorzugsweise wird das Geräusch zusammen mit den Betriebsinformationen aufgezeichnet. Die Betriebsinformationen können dabei beispielsweise ein Beschleunigungswert, ein Geschwindigkeitswert oder aber ein Neigungswinkel des Kraftfahrzeugs sein.

Die Erfindung betrifft auch eine mobile Vorrichtung. Die mobile Vorrichtung ist zum Erkennen eines von einem Normalbetriebszustand eines Kraftfahrzeugs abweichenden Sonderbetriebszustands des Kraftfahrzeugs ausgebildet. Durch die mobile Vorrichtung ist während des Betriebs des Kraftfahrzeugs ein vom Kraftfahrzeug abgegebenes Geräusch im Innenraum des Kraftfahrzeugs erfassbar. Die mobile Vorrichtung ist dabei separat zum Kraftfahrzeug ausgebildet. Weiterhin ist das Geräusch mit einer Mehrzahl von durch die mobile Vorrichtung gleichgestellten Referenzgeräuschen vergleichbar. Das Geräusch ist bei Überschreiten eines Mindestähnlichkeitswerts einem ähnlichsten Referenzgeräusch der Mehrzahl der Referenzgeräusche anhand des Vergleichs zuordenbar und der Sonderbetriebszustand ist durch die erfolgte Zuordnung erkennbar.

Die Erfindung betrifft auch ein Computerprogrammprodukt umfassend Befehle, die bewirken, dass die Vorrichtung des Anspruchs 8 die Verfahrensschritte nach einem der Ansprüche 1 bis 7 ausführt.

Das Computerprogrammprodukt ist dabei insbesondere auf einem computerlesbaren Medium abgespeichert, beispielsweise einem Flashspeicher, einem flüchtigen Speicher oder einem Magnetspeicher.

Das Computerprogrammprodukt liegt dabei vorzugsweise als Applikationsprogramm vor. Das Applikationsprogramm ist vorzugsweise ausgebildet, um auf einem mobilen Betriebssystem, beispielsweise iOS oder Android oder WindowsMobile ausgeführt zu werden.

Des Weiteren betrifft die Erfindung auch eine Referenzgeräuschsammlung, welche eine Mehrzahl von Referenzgeräuschen aufweist. Den Referenzgeräuschen der Mehrzahl der Referenzgeräusche sind jeweils ein Sonderbetriebszustand und zumindest eine defekte Komponente zugeordnet.

Insbesondere ist die Referenzgeräuschsammlung als Datenbank ausgebildet. Die Referenzgeräuschsammlung kann beispielsweise auf einem fahrzeugexternen und separat zur mobilen Vorrichtung ausgebildeten Server vorgehalten werden oder aber ergänzend oder alternativ in der mobilen Vorrichtung abgespeichert werden. Die Referenzgeräuschsammlung kann auch an mehreren Orten vorgehalten werden und beispielsweise in vorbestimmten Abständen synchronisiert werden.

Die Referenzgeräuschsammlung umfasst die Zuordnung von Referenzgeräuschen zu defekten Komponenten des Kraftfahrzeugs. Weiterhin sind den Referenzgeräuschen Fahrzeughersteller, Fahrzeugtypen, Positionen der mobilen Einrichtung, Zustände des Kraftfahrzeugs, Beschleunigungswerte, Umgebungssituationen und/oder Neigungswinkel des Kraftfahrzeugs zugeordnet. Die Zuordnung kann beispielsweise als relationale Datenbank vorliegen.

Die Zuordnung erfolgt insbesondere anhand vorbekannten Trainingsdaten.

Durch die den Referenzgeräuschen zugeordnete Information können Referenzgeräusche für den Vergleich ausgewählt werden. Der Vergleich kann dadurch dann schneller und zuverlässiger erfolgen, da weniger Referenzgeräusche verglichen werden müssen. Vorzugsweise ist es vorgesehen, dass den Referenzgeräuschen der Mehrzahl der Referenzgeräusche jeweils ein Werkstattvorschlag zugeordnet ist. Durch den Werkstattvorschlag kann eine geeignete Werkstatt zur Reparatur der defekten Komponente vorgeschlagen werden.

Vorteilhafte Ausführungen des erfindungsgemäßen Verfahrens sind als vorteilhafte Ausführungen der mobilen Vorrichtung und des Computerprogrammprodukts anzusehen.

Ausführungsbeispiele der Erfindung werden nachfolgend anhand schematischer Zeichnungen näher erläutert. Es zeigen:
- Fig. 1: eine schematische Draufsichtdarstellung eines Kraftfahrzeugs mit einem Ausführungsbeispiel einer mobilen Vorrichtung in einem Innenraum des Kraftfahrzeugs; und
- Fig. 2: eine schematische Darstellung der mobilen Vorrichtung mit einem Mikrofon.

In den Figuren werden gleiche oder funktionsgleiche Elemente mit den gleichen Bezugszeichen versehen.

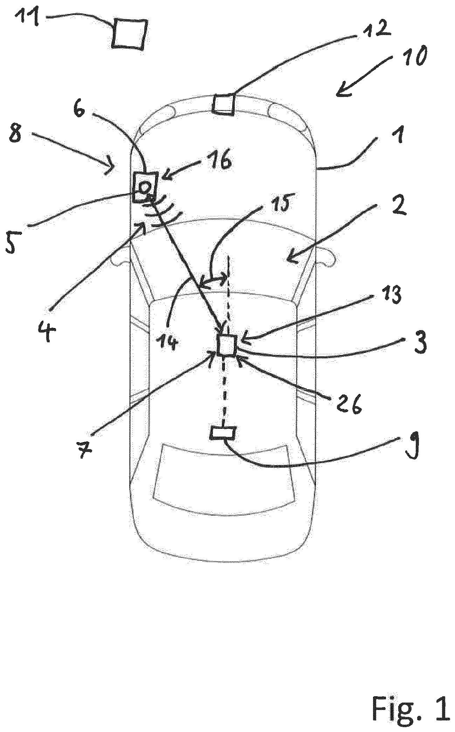

Fig. 1 zeigt eine schematische Darstellung eines Kraftfahrzeugs 1 in Draufsicht. In einem Innenraum 2 des Kraftfahrzeugs 1 ist eine mobile Vorrichtung 3. Der Innenraum 2 des Kraftfahrzeugs 1 ist insbesondere eine Fahrgastzelle bzw. ein Raum des Kraftfahrzeugs 1, in welchem sich ein Fahrzeuginsasse üblicherweise aufhält.

Die mobile Vorrichtung 3 ist separat zu dem Kraftfahrzeug 1 ausgebildet und wird beispielsweise von einem Nutzer der mobilen Vorrichtung 3 in Händen gehalten. Die mobile Vorrichtung 3 kann aber auch an einem beliebigen Ort im Innenraum 2, beispielsweise auf einer Mittelkonsole des Kraftfahrzeugs 1, abgelegt werden. Die mobile Vorrichtung 3 kann beispielsweise auch an einer Halterung im Kraftfahrzeug 1 befestigt werden.

Die mobile Vorrichtung 3 kann beispielsweise drahtlos mit einer Datenübertragungsschnittstelle des Kraftfahrzeugs 1, beispielsweise mittels einer Bluetoothverbindung, gekoppelt werden.

Mit der mobilen Vorrichtung 3 wird ein vom Kraftfahrzeug 1 abgegebenes Geräusch 4 im Innenraum 2 des Kraftfahrzeugs 1 erfasst. Das Geräusch 4 kommt von einer Quelle 5. Es breitet sich also Schall, welcher das Geräusch 4 charakterisiert, von der Quelle 5 aus. Die Quelle 5 ist insbesondere in bzw. an einer defekten Komponente 6 des Kraftfahrzeugs 1 vorhanden.

Gemäß dem Ausführungsbeispiel von Fig. 1 wird das Geräusch 4 von einem vorne links in dem Kraftfahrzeug 1 angeordneten Radlager als die defekte Komponente 6 abgegeben. Die defekte Komponente 6 kann aber als vielfältiges Bauteil des Kraftfahrzeugs 1 vorliegen. So kann die defekte Komponente 6 beispielsweise ein Scheibenwischer, ein Reifen, eine Abgasanlage, insbesondere ein Mittelschalldämpfer oder ein Endschalldämpfer, eine Bremsanlage, eine Halterung oder ein Verkleidungsteil sein.

Das Geräusch 4 wird nun mit einer Mehrzahl von Referenzgeräuschen 7 verglichen. Die Mehrzahl der Referenzgeräusche 7 wird insbesondere durch die mobile Vorrichtung 3 bereitgestellt. Das bedeutet, dass die mobile Vorrichtung 3 die Mehrzahl der Referenzgeräusche 7 selbst vorhält und diese somit in der mobilen Vorrichtung 3 abgespeichert ist oder aber, dass die Mehrzahl der Referenzgeräusche 7 auf einem vorrichtungsexternen Server vorgehalten wird und von der mobilen Vorrichtung 3 bei Bedarf abgerufen wird, beispielsweise über eine drahtlose Verbindung.

Die Mehrzahl der Referenzgeräusche 7 wird durch eine Referenzgeräuschsammlung 26 bereitgestellt.

Bei dem Vergleich des Geräusches 4 mit den Referenzgeräuschen 7 ergeben sich Ähnlichkeitswerte. Falls zumindest ein Ähnlichkeitswert des Vergleichs einen Mindestähnlichkeitswert überschreitet, wird das Geräusch 4 einem ähnlichsten Referenzgeräusch der Mehrzahl der Referenzgeräusche 7 zugeordnet. Das ähnlichste Referenzgeräusch ist insbesondere das Referenzgeräusch, welches durch den Vergleich den höchsten Ähnlichkeitswert aufweist. Wird das Geräusch 4 dem ähnlichsten Referenzgeräusch zugeordnet, also wird der Mindestähnlichkeitswert überschritten, so wird ein Sonderbetriebszustand 8 des Kraftfahrzeugs 1 erkannt.

Der Sonderbetriebszustand 8 unterscheidet sich von einem Normalbetriebszustand des Kraftfahrzeugs 1. Der Sonderbetriebszustand 8 liegt beispielsweise dann vor, wenn wie im Ausführungsbeispiel von Fig. 1 ein defektes Radlager vorliegt. Der Normalbetriebszustand hingegen liegt vor, wenn das Kraftfahrzeug 1 defektfrei bzw. störungsfrei betrieben wird. Der Sonderbetriebszustand 8 wird insbesondere durch das Vorliegen der defekten Komponente 6 charakterisiert.

Nach der Zuordnung des Geräusches 4 zu dem ähnlichsten Referenzgeräusch wird dann die defekte Komponente 6 bestimmt. Die defekte Komponente 6 kann insbesondere dadurch bestimmt werden, indem den Referenzgeräuschen 7 jeweils zumindest eine defekte Komponente 6 zugeordnet ist. Die Zuordnung zwischen defekten Komponenten 6 und Referenzgeräuschen 7 kann beispielsweise durch ein Training erfolgen, welches beispielsweise fahrzeugherstellerseitig erfolgt oder aber von dem Nutzer selbst durchgeführt wird. Das Training der Zuordnung kann aber auch durch einen beliebigen Dritten erfolgen.

Durch die Kopplung der mobilen Vorrichtung 3 mit dem Kraftfahrzeug 1, kann die mobile Vorrichtung 3 Informationen von einem Kommunikationsbus 9 des Kraftfahrzeugs 1 beziehen. Der Kommunikationsbus 9 ist dabei beispielsweise als CAN-Bus, LIN-Bus oder Ethernet ausgebildet. An den Kommunikationsbus 9 des Kraftfahrzeugs 1 sind insbesondere eine Vielzahl von Sensoren und Informationsgeber angebunden. Anhand der Information vom Kommunikationsbus 9 kann ein Zustand 10 des Kraftfahrzeugs 1 bestimmt werden. Der Zustand 10 kann beispielsweise ein aktuell vorliegender Geschwindigkeitswert, ein aktuell vorliegender Beschleunigungswert, eine Radumdrehungszahl oder auch die Aktivität einer Komponente sein. Durch den Zustand 10 liegt dann beispielsweise auch die Information vor, ob ein Scheibenwischer in einem aktiven oder deaktivierten Zustand vorliegt oder aber ob eine Beleuchtungseinheit aktiv oder inaktiv ist.

Gemäß dem Ausführungsbeispiel wird das Geräusch 4 vor dem Vergleich mit den Referenzgeräuschen 7 von einem Normalgeräusch bereinigt. Es wird dann nur noch das bereinigte Geräusch mit der Mehrzahl der Referenzgeräusche 7 verglichen. Das Normalgeräusch liegt vor, wenn das Kraftfahrzeug 1 im Normalbetriebszustand betrieben wird.

Insbesondere liegen mehrere Normalgeräusche vor, welche durch einen jeweiligen Zustand 10 des Kraftfahrzeugs 1 charakterisiert sind. So wird das Normalgeräusch beispielsweise bei unterschiedlichen Geschwindigkeiten des Kraftfahrzeugs 1 aufgezeichnet. Das Normalgeräusch liegt also vorzugsweise in verschiedenen Ausprägungen vor, aber vorzugsweise nur für Fälle, in denen das Kraftfahrzeug 1 störungsfrei betrieben wird.

Gemäß dem Ausführungsbeispiel wird während des Erfassens des Geräusches 4 eine aktuelle Umgebungssituation 11 des Kraftfahrzeugs 1 erfasst. Die aktuelle Umgebungssituation 11 kann dabei beispielsweise ein Fahrbahnzustand, also eine Schotterstraße oder aber eine Betonstraße, Regenfall, Schneefall, andere Verkehrsteilnehmer, Tiere, Windstärke oder Flugobjekte sein. Die aktuelle Umgebungssituation 11 wird insbesondere mit zumindest einem Umgebungssensor 12 des Kraftfahrzeugs 1 erfasst. Der Umgebungssensor 12 kann beispielsweise als Kamera, Radarsensor, Ultraschallsensor, Lidar oder Laserscanner ausgebildet sein. Die Umgebungssituation 11 kann aber auch durch einen Umgebungssensor der mobilen Vorrichtung 3 erfasst werden. So kann die mobile Vorrichtung 3 beispielsweise eine Kamera als den Umgebungssensor 12 aufweisen. Anhand der aktuellen Umgebungssituation 11 kann dann auch das Normalgeräusch aus einer Sammlung von Normalgeräuschen ausgewählt werden.

Die aktuelle Umgebungssituation 11 kann aber auch durch einen fahrzeugexternen oder vorrichtungsexternen Sensor erfasst werden, beispielsweise durch einen Umgebungssensor eines weiteren Kraftfahrzeugs, welches die aktuelle Umgebungssituation 11 an das Kraftfahrzeug 1 überträgt.

Gemäß dem Ausführungsbeispiel ist es auch vorgesehen, dass eine Position 13 der mobilen Vorrichtung 3 im Innenraum 2 relativ zum Kraftfahrzeug 1 bestimmt wird. Die Position 13 kann beispielsweise abhängig von einem globalen Navigationssatellitensystem (GNSS) bestimmt werden. In diesem Fall weist die mobile Vorrichtung 3 dann beispielsweise einen GNSS-Empfänger auf und/oder das Kraftfahrzeug 1 weist einen weiteren GNSS-Empfänger auf. Die Position 13 kann aber auch anhand einer Bildaufnahme mit einer Kamera der mobilen Vorrichtung 3 bestimmt werden. So kann beispielsweise ein Bild von dem Innenraum 2 aufgenommen werden, wodurch anhand von Vergleichen mit georeferenzierten Referenzbildern auf die Position 13 der mobilen Vorrichtung 3 im Innenraum 2 zurückgeschlossen werden kann.

Weiterhin ist es insbesondere vorgesehen, dass eine Entfernung 14 von der Quelle 5 zur Position bestimmt wird. Die Entfernung 14 kann beispielsweise anhand von zwei unterschiedlichen Positionen 13 der mobilen Vorrichtung 3 bestimmt werden. So wird das Geräusch 4 beispielsweise von zumindest zwei unterschiedlichen Positionen 13 im Innenraum 2 erfasst. Anhand der Ausrichtung der mobilen Vorrichtung 3 zur Quelle 5 und/oder der jeweiligen Lautstärke des Geräusches 4, welche beispielsweise von ein einer Position 13 zur einer anderen Position 13 variiert, kann die Entfernung 14 dann bestimmt werden.

Insbesondere ergänzend oder alternativ wird eine Ausrichtung 15 der Quelle 5 zur mobilen Vorrichtung 3 bestimmt. Die Ausrichtung 15 kann beispielsweise abhängig von einem Bezugspunkt, welcher beispielsweise die Mitte der Hinterachse des Kraftfahrzeugs 1 oder aber die Mitte des Lenkrads des Kraftfahrzeugs 1 sein kann, bestimmt werden.

Anhand der Entfernung 14 und der Ausrichtung 15 wird dann eine Position 16 der Quelle 5 bestimmt. Die Position 16 der Quelle 5 kann beispielsweise auch ein Positionsbereich sein, welcher sich beispielsweise in einem Teil des Kraftfahrzeugs 1 befindet und lediglich einen Teil von Komponenten des Kraftfahrzeugs 1 umfasst. Durch die Position 16 der Quelle 5 erfolgt dann eine Auswahl der Referenzgeräusche 7 und es wird das Geräusch 4 lediglich mit den ausgewählten Referenzgeräuschen verglichen. Die Auswahl der Referenzgeräusche 7 erfolgt beispielsweise derart, dass lediglich Referenzgeräusche, welche einer defekten Komponente 6 zugeordnet sind, welche sich an der Position 16 der Quelle 5 oder aber in einem bestimmten Abstand zur Position 16 der Quelle 5 befinden, bei der Zuordnung berücksichtigt werden.

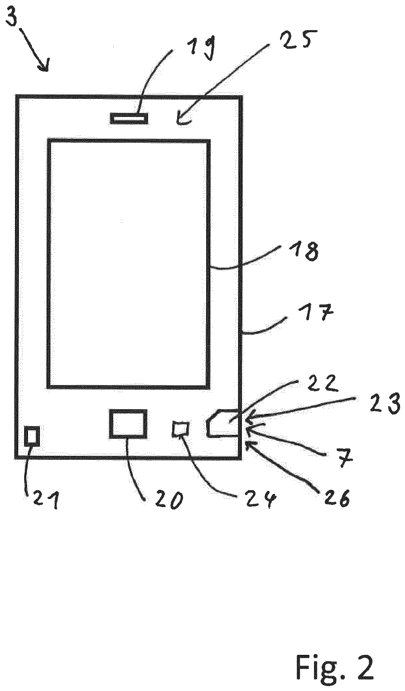

Fig. 2 zeigt die mobile Vorrichtung 3. Die mobile Vorrichtung 3 ist dabei insbesondere als Smartphone ausgebildet. Die mobile Vorrichtung 3 kann aber beispielsweise auch als ein Laptop oder ein PC (Personal Computer) mit Soundkarte ausgebildet sein. Die mobile Vorrichtung 3 weist gemäß dem Ausführungsbeispiel ein Gehäuse 17, ein Bildschirm 18, ein Lautsprecher 19, ein Bedienelement 20 und ein Mikrofon 21 auf.

Weiterhin weist die mobile Vorrichtung 3 gemäß dem Ausführungsbeispiel einen Speicher 22 auf. Auf dem Speicher 22 ist ein Computerprogrammprodukt 23 gespeichert. Das Computerprogrammprodukt 23 umfasst Instruktionen für die mobile Vorrichtung 3 zum Ausführen des Verfahrens zum Erkennen des Sonderbetriebszustands 8.

Das Computerprogrammprodukt 23 ist insbesondere als Anwendungsprogramm bzw. als Applikationsprogramm, kurz "App" ausgebildet.

Mittels der mobilen Vorrichtung 3 wird gemäß dem Ausführungsbeispiel auch ein aktueller Beschleunigungswert während des Erfassens des Geräusches 4 erfasst. Der aktuelle Beschleunigungswert kann beispielsweise durch einen Beschleunigungssensor 24 der mobilen Vorrichtung 3 erfasst werden. Ergänzend oder alternativ kann der aktuelle Beschleunigungswert aber auch durch einen GNSS-Empfänger der mobilen Vorrichtung 3 erfasst werden. Die Zuordnung des Geräusches 4 zu dem ähnlichsten Referenzgeräusch erfolgt dann insbesondere abhängig von dem aktuellen Beschleunigungswert der mobilen Vorrichtung 3. Anhand des aktuellen Beschleunigungswerts der mobilen Vorrichtung 3 kann beispielsweise wiederum eine Auswahl von Referenzgeräuschen 7 erfolgen. Lediglich die ausgewählten Referenzgeräusche 7 werden dann beispielsweise bei dem Vergleich berücksichtigt.

Erfindungsgemäß ist es vorgesehen, dass durch die mobile Vorrichtung 3 ein Werkstattvorschlag 25, beispielsweise über den Bildschirm 18 und/oder den Lautsprecher 19, ausgegeben wird. Der Werkstattvorschlag wird anhand einer Zuordnung von Werkstätten zu den jeweiligen Referenzgeräuschen gemacht. So ist dem Referenzgeräusch eine Werkstatt zugeordnet, welche für eine Reparatur derjenigen dem Referenzgeräusch 7 zugeordneten defekten Komponente 6 spezialisiert ist. Beispielsweise kann auch eine Werkstatt vorgeschlagen werden, welche sich aktuell gerade in der Nähe des Kraftfahrzeugs 1 befindet.

Ein Ablauf des Verfahrens stellt sich beispielsweise wie folgt dar. Ein Nutzer der mobilen Vorrichtung 3 und/oder de Kraftfahrzeugs 1 registriert ein Bildgeräusch bzw. das Geräusch 4. Daraufhin installiert er gegebenenfalls das Computerprogrammprodukt 23 auf der mobilen Vorrichtung 3 und führt dieses aus.

Mit der mobilen Vorrichtung 3 wird das Geräusch 4 erfasst. Das Geräusch 4 kann beispielsweise über das Mikrofon 21 der mobilen Vorrichtung 3 erfasst werden oder aber, falls die mobile Vorrichtung 3 mit dem Kraftfahrzeug 1 gekoppelt ist, über ein Mikrofon des Kraftfahrzeugs 1. Die Bedienung der mobilen Vorrichtung 3 kann beispielsweise mit einer Sprach- und/oder Gestensteuerung folgen.

Das Geräusch 4 wird von der mobilen Vorrichtung 3 dann insbesondere kontinuierlich aufgezeichnet. Die Speicherung des Geräusches 4 kann beispielsweise in einem Ringspeicher erfolgen, in welchem ältere Daten nach einem bestimmten Ersetzungskonzept durch neuere Daten ersetzt werden. Das Geräusch 4 kann aber beispielsweise auch direkt an einen externen Server übertragen werden und dort gespeichert werden. Die Messung kann Werte beinhalten, welche die mobile Vorrichtung 3 über eine Schnittstelle vom Kommunikationsbus des Kraftfahrzeugs 1 einliest. Weiterhin werden weitere Messgrößen mitgemessen, die die mobile Vorrichtung 3 bereitstellt, insbesondere Beschleunigungs- und/oder Lageinformationen sowie Informationen zur mobilen Vorrichtung 3, um dessen Eigenschaften wie Frequenzgang des Mikrofons 21 bei der späteren Zuordnung zu berücksichtigen.

Der Nutzer startet die Aufzeichnung dann und die mobile Vorrichtung 3 zeichnet das Geräusch 4 beispielsweise solange auf, bis der Nutzer die Aufzeichnung beendet. Die Steuerung bezüglich Beginn und Ende der Aufzeichnung des Geräusches 4 kann beispielsweise über ein normales Benutzerinterface der mobilen Vorrichtung 3 erfolgen oder aber über Sprachsteuerung. Ergänzend oder alternativ kann das Messende auch über einen akustischen Auslöser erfolgen, beispielsweise wenn in einer ruhigen Umgebung ein kurzes Störgeräusch analysiert werden soll, welches nur selten auftritt. Es wird dem Nutzer dann die Möglichkeit geboten, das Geräusch 4 anzuhören und so die Aufnahme zu kontrollieren.

Weiterhin kann der Nutzer beispielsweise die Aufzeichnung des Geräusches 4 noch mit weiteren Informationen anreichern, um die spätere Analyse und Geräuschklassifikation zu unterstützen, beispielsweise Geräuschquelle, Fahrzeugtyp, Reifengröße, Motorart, Hubraum. Für diese Anreicherung der Messung mit Zusatzinformationen stellt ein Portal dem Computerprogrammprodukt 23 Auswahlmasken zur Geräuschklassifizierung zur Verfügung, welche online über eine mobile Datenverbindung heruntergeladen werden können oder aber auch in der mobilen Vorrichtung 3 abgespeichert werden können.

Ferner bietet das Computerprogrammprodukt 23 die Möglichkeit, dass der Nutzer den genauen Anfang und das Ende des Geräusches 4 in der Aufzeichnung markiert. Das kann beispielsweise durch einfachen Tastendruck beim Aufspielen geschehen und durch eine grafische Darstellung des Signalpegels über der Zeit angereichert sein. Das Computerprogrammprodukt 23 bietet beispielsweise die Möglichkeit die Aufzeichnung zu verkürzen, um unnötig lange Vor- bzw. Nachlaufphasen zu eliminieren. Dieses kann durch einfachen Tastendruck beim Abspielen geschehen aber auch durch eine grafische Darstellung des Signalpegels über der Zeit angereichert sein.

Das Computerprogrammprodukt 23 bietet dem Nutzer die Möglichkeit das aufgenommene nachbearbeitete Geräusch 4 in ein fahrzeugexternes Portal zu laden. Das kann von unterwegs über eine mobile Datenverbindung geschehen. Das Portal speichert dann beispielsweise alle hochgeladenen Geräusche 4. Im Portal kommt beispielsweise eine Analysesoftware zur Anwendung. Professionelle Anbieter können sich dabei die hochgeladenen Geräusche 4 zum Zwecke einer Eigenanalyse aus dem Portal herunterladen, um den Nutzern ihre Analyseergebnisse und eventuell weiterführend Dienstleistungen anzubieten.

Der Vergleich des Geräusches 4 mit den Referenzgeräuschen 7 kann beispielsweise abhängig von einer FFT (Fast Fourier Transformation) erfolgen. Dabei werden insbesondere Frequenzen und Pegel miteinander verglichen. Es werden beispielsweise verschiedene Parameter bestimmt zum Beispiel kleinste und größte Frequenz bzw. eine bestimmte Anzahl von Hauptfrequenzen und die Pegel zu den Hauptfrequenzen. Diese Werte werden dann in Form einer Zuordnung in einer Datenbank bzw. der Referenzgeräuschsammlung 26 mit den Referenzgeräuschen 7 abgelegt.

Auf Basis der so bestimmten Parameter berechnet das Computerprogrammprodukt 23 beispielsweise mit der Methode der kleinsten Fehlerquadrate im Zuge des Vergleichs einen Ähnlichkeitswert zwischen dem zu untersuchenden Geräusch 4 und den Referenzgeräuschen 7 in der Referenzgeräuschsammlung 26. Es wird dann der jeweilige Parameter des zu untersuchenden Signals auf 100% gesetzt, der Übertrag des prozentualen Unterschieds zum betreffenden Parameter des Vergleichssignals ermittelt und quadriert. Diese Fehlerquadrate werden aufsummiert. Das Vergleichssignal mit der geringsten Summe der Fehlerquadrate kommt dem zu untersuchenden Signal am nächsten. Optional kann der Algorithmus beschleunigt werden, wenn die Berechnung zu einem Vergleichsgeräusch abgebrochen wird, sobald die aktuelle Summe der Fehlerquadrate bereits größer als die finale Summe beim aktuell ähnlichsten Signal ist. Es können auch andere Verfahren zur Anwendung kommen.

Bei einer Verbesserung der Algorithmen zur Analyse und Klassifizierung nach der initialen Analyse des Geräusches, ist es möglich, die verbesserten Algorithmen nachträglich auf die abgespeicherten Geräusche 4 anzuwenden. Benutzer können dann über neue bzw. geänderte Analyseergebnisse informiert werden. Das Computerprogrammprodukt 23 stellt dem Nutzer dann die ähnlichsten Referenzgeräusche 7 zur Verfügung, damit er sie selbst mit seinem Störgeräusch bzw. dem Geräusch 4 vergleichen kann. Diese Ergebnisdarstellung wird bevorzugt in einer tabellarischen Anordnung geschehen. Idealerweise passt das erste Ergebnis auch. Sollte dies nicht der Fall sein, hilft ein weiteres Vorgehen weiter. Wenn ein Benutzer durch die Ergebnisliste scrollt werden die Geräusche alle in einer Schleife abgespielt, der Nutzer hört dann allerdings immer dasjenige Referenzgeräusch 7, über dessen Tabelleneintrag sich gerade der Cursor befindet. Bei Verwendung von hochwertigerer Ausrüstung kann diese Funktion auch über einen Drehknopf der mobilen Vorrichtung 3 bzw. dem Bedienelement 20 realisiert sein, damit der Nutzer sich durch die verschiedenen Referenzgeräusche 7 hindurchdrehen kann.

Durch die Referenzgeräuschsammlung 26 wird eine Datenbank, also eine zentrale Plattform zum Austausch von Referenzgeräuschen 7 geschaffen. Die Referenzgeräuschsammlung 26 kann dann an verschiedene Nutzer von weiteren mobilen Vorrichtungen 3 weitergegeben werden.

Bei einem weiteren Ausführungsbeispiel wird das Geräusch 4 und/oder das Normalgeräusch von dem Nutzer selbstständig oder von einer Werkstatt zur Referenzgeräuschsammlung 26 hinzugefügt. Dadurch kann die Referenzgeräuschsammlung 26 stetig erweitert werden.

Insbesondere überprüft die Werkstatt vor dem Hinzufügen des Geräusches 4 zur Referenzgeräuschsammlung 26, ob die Zuordnung mit dem Sonderbetriebszustand 8 und/oder der defekten Komponente 6 korrekt ist.

Die mobile Vorrichtung 3 und/oder die Referenzgeräuschsammlung 26 weist vorzugsweise eine Schnittstelle für die Werkstatt auf, um das Geräusch 4 zur Referenzgeräuschsammlung 26 hinzuzufügen.

Der Nutzer stellt beispielsweise sein aufgenommenes Geräusch 4 dem Computerprogrammprodukt 23 für den Vergleich zur Verfügung und es wird ihm nach Erkennen des Sonderbetriebszustands 8 die defekte Komponente 6 ausgegeben.

Das Geräusch 4 kann zusammen mit Zusatzinformationen, die beispielsweise dem Fahrzeugtyp und/oder dem Fahrzeugalter, einer Werkstatt übermittelt werden, erfasst werden. So kann die Werkstatt entweder eine Ferndiagnose tätigen und/oder sie kann sich auf den Reparaturauftrag vorbereiten.

Das Befüllen der Referenzgeräuschsammlung 26 durch weitere Nutzer von weiteren mobilen Vorrichtungen kann beispielsweise angeregt werden, indem die Nutzer dafür eine Belohnung erhalten, wie beispielsweise eine Bestätigung in einem sozialen Netzwerk.

### Bezugszeichenliste

- 1: Kraftfahrzeug
- 2: Innenraum
- 3: mobile Vorrichtung
- 4: Geräusch
- 5: Quelle
- 6: defekte Komponente
- 7: Mehrzahl von Referenzgeräuschen
- 8: Sonderbetriebszustand
- 9: Kommunikationsbus
- 10: Zustand des Kraftfahrzeugs
- 11: Umgebungssituation
- 12: Umgebungssensor
- 13: Position der mobilen Vorrichtung
- 14: Entfernung
- 15: Ausrichtung
- 16: Position der Quelle
- 17: Gehäuse
- 18: Bildschirm
- 19: Lautsprecher
- 20: Bedienelement
- 21: Mikrofon
- 22: Speicher
- 23: Computerprogrammprodukt
- 24: Beschleunigungssensor
- 25: Werkstattvorschlag
- 26: Referenzgeräuschsammlung

## Patentansprüche

1. Verfahren zum Erkennen eines von einem Normalbetriebszustand eines Kraftfahrzeugs (1) abweichenden Sonderbetriebszustands (8) des Kraftfahrzeugs (1), bei welchem ein während des Betriebs des Kraftfahrzeugs (1) vom Kraftfahrzeug (1) abgegebenes Geräusch (4) im Innenraum (2) des Kraftfahrzeugs (1) mit einer vom Kraftfahrzeug (1) separaten mobilen Vorrichtung (3) erfasst wird und das Geräusch (4) mit einer Mehrzahl von durch die mobile Vorrichtung (3) bereitgestellten Referenzgeräuschen (7) verglichen wird, wobei das Geräusch (4) bei Überschreiten eines Mindestähnlichkeitswerts einem ähnlichsten Referenzgeräusch der Mehrzahl der Referenzgeräusche (7) anhand des Vergleichs zugeordnet wird und der Sonderbetriebszustand (8) durch die erfolgte Zuordnung erkannt wird, wobei eine defekte Komponente (6) des Kraftfahrzeugs (1) mittels einer Zuordnung zwischen der defekten Komponente (6) und der Mehrzahl der Referenzgeräusche (7) bestimmt wird,
**dadurch gekennzeichnet, dass**
ein Werkstattvorschlag (25) für das Kraftfahrzeug (1) mittels einer Zuordnung zwischen dem Werkstattvorschlag (25) und der Mehrzahl der Referenzgeräusche (7) bestimmt wird.

2. Verfahren nach Anspruch 1,
**dadurch gekennzeichnet, dass**
zumindest ein Zustand (10) des Kraftfahrzeugs (1) anhand eines Kommunikationsbus (9) des Kraftfahrzeugs (1) bestimmt wird und die Mehrzahl der durch die mobile Vorrichtung (3) bereitgestellten Referenzgeräusche (7) abhängig von einer Zuordnung zwischen dem Zustand (10) und der Mehrzahl der Referenzgeräusche (7) ausgewählt wird.

3. Verfahren nach einem der vorhergehenden Ansprüche,
**dadurch gekennzeichnet, dass**
das Geräusch (4) von einem den Normalbetriebszustand charakterisierenden Normalgeräusch bereinigt wird und das bereinigte Geräusch mit der Mehrzahl der Referenzgeräusche (7) verglichen wird.

4. Verfahren nach einem der vorhergehenden Ansprüche,
**dadurch gekennzeichnet, dass**
eine Position (13) der mobilen Vorrichtung (3) im Innenraum (2) relativ zum Kraftfahrzeug (1) bestimmt wird und eine Entfernung (14) der Quelle (5) des Geräusches (4) zur Position (13) der mobilen Vorrichtung (3) bestimmt wird und/oder eine Ausrichtung (15) der Quelle (5) des Geräusches (4) relativ zur mobilen Vorrichtung (3) im Innenraum (2) bestimmt wird, und abhängig von der Entfernung (14) und/oder der Ausrichtung (15) eine Position (16) der Quelle (5) bestimmt wird, wobei das Geräusch (4) der Mehrzahl der Referenzgeräusche (7) abhängig von der Position (16) der Quelle (5) zum Kraftfahrzeug (1) zugeordnet wird.

5. Verfahren nach einem der vorhergehenden Ansprüche,
**dadurch gekennzeichnet, dass**
ein aktueller Beschleunigungswert der mobilen Vorrichtung (3) während des Erfassens des Geräusches (4) erfasst wird und das Geräusch (4) der Mehrzahl der Referenzgeräusche (7) abhängig von dem aktuellen Beschleunigungswert zugeordnet wird.

6. Verfahren nach einem der vorhergehenden Ansprüche,
**dadurch gekennzeichnet, dass**
eine aktuelle Umgebungssituation (11) des Kraftfahrzeugs (1) während des Erfassens des Geräusches (4) erfasst wird und das Geräusch (4) der Mehrzahl der Referenzgeräusche (7) abhängig von der aktuellen Umgebungssituation (11) zugeordnet wird.

7. Verfahren nach einem der vorhergehenden Ansprüche,
**dadurch gekennzeichnet, dass**
das Geräusch (4), insbesondere zusammen mit Betriebsinformation des Kraftfahrzeugs (1), durch die mobile Vorrichtung (3) aufgezeichnet wird und als ein Referenzgeräusch der Mehrzahl der Referenzgeräusche (7) bereitgestellt wird.

8. Mobile Vorrichtung (3) zum Erkennen eines von einem Normalbetriebszustand eines Kraftfahrzeugs (1) abweichenden Sonderbetriebszustands (8) des Kraftfahrzeugs (1), mit welcher ein während des Betriebs des Kraftfahrzeugs (1) vom Kraftfahrzeug (1) abgegebenes Geräusch (4) im Innenraum (2) des Kraftfahrzeugs (1) mit der vom Kraftfahrzeug (1) separaten mobilen Vorrichtung (3) erfassbar ist und das Geräusch (4) mit einer Mehrzahl von durch die mobile Vorrichtung (3) bereitgestellten Referenzgeräuschen (7) vergleichbar ist, wobei das Geräusch (4) bei Überschreiten eines Mindestähnlichkeitswerts einem ähnlichsten Referenzgeräusch der Mehrzahl der Referenzgeräusche (7) anhand des Vergleichs zuordenbar ist und der Sonderbetriebszustand (8) durch die erfolgte Zuordnung erkennbar ist, wobei eine defekte Komponente (6) des Kraftfahrzeugs (1) mittels einer Zuordnung zwischen der defekten Komponente (6) und der Mehrzahl der Referenzgeräusche (7) bestimmt wird, **dadurch gekennzeichnet, dass**
die mobile Vorrichtung eingerichtet ist einen Werkstattvorschlag (25) für das Kraftfahrzeug (1) mittels einer Zuordnung zwischen dem Werkstattvorschlag (25) und der Mehrzahl der Referenzgeräusche (7) zu bestimmen.

9. Computerprogrammprodukt (23) umfassend Befehle, die bewirken, dass die Vorrichtung des Anspruchs 8 die Verfahrensschritte nach einem der Ansprüche 1 bis 7 ausführt.

## Claims

1. Method for detecting a special operating state (8) of a motor vehicle (1) which differs from a normal operating state of the motor vehicle (1), in which a noise (4) emitted by the motor vehicle (1) during operation of the motor vehicle (1) is captured in the interior (2) of the motor vehicle (1) using a mobile apparatus (3) which is separate from the motor vehicle (1), and the noise (4) is compared with a plurality of reference noises (7) provided by the mobile apparatus (3), the noise (4) being assigned to a most similar reference noise of the plurality of reference noises (7) on the basis of the comparison if a minimum similarity value is exceeded, and the special operating state (8) being detected by the assignment which has been carried out, a defective component (6) of the motor vehicle (1) being determined by means of an assignment between the defective component (6) and the plurality of reference noises (7),
**characterized in that**
a workshop proposal (25) for the motor vehicle (1) is determined by means of an assignment between the workshop proposal (25) and the plurality of reference noises (7).

2. Method according to Claim 1,
**characterized in that**
at least one state (10) of the motor vehicle (1) is determined on the basis of a communication bus (9) of the motor vehicle (1), and the plurality of reference noises (7) provided by the mobile apparatus (3) are selected on the basis of an assignment between the state (10) and the plurality of reference noises (7) .

3. Method according to one of the preceding claims,
**characterized in that**
the noise (4) is purged of a normal noise characterizing the normal operating state and the purged noise is compared with the plurality of reference noises (7).

4. Method according to one of the preceding claims,
**characterized in that**
a position (13) of the mobile apparatus (3) in the interior (2) relative to the motor vehicle (1) is determined, and a distance (14) between the source (5) of the noise (4) and the position (13) of the mobile apparatus (3) is determined, and/or an orientation (15) of the source (5) of the noise (4) relative to the mobile apparatus (3) in the interior (2) is determined, and a position (16) of the source (5) is determined on the basis of the distance (14) and/or the orientation (15), the noise (4) being assigned to the plurality of reference noises (7) on the basis of the position (16) of the source (5) with respect to the motor vehicle (1).

5. Method according to one of the preceding claims,
**characterized in that**
a current acceleration value of the mobile apparatus (3) is captured while capturing the noise (4), and the noise (4) is assigned to the plurality of reference noises (7) on the basis of the current acceleration value.

6. Method according to one of the preceding claims,
**characterized in that**
a current environmental situation (11) of the motor vehicle (1) is captured while capturing the noise (4), and the noise (4) is assigned to the plurality of reference noises (7) on the basis of the current environmental situation (11).

7. Method according to one of the preceding claims,
**characterized in that**
the noise (4), in particular together with operating information relating to the motor vehicle (1), is recorded by the mobile apparatus (3) and is provided as a reference noise of the plurality of reference noises (7).

8. Mobile apparatus (3) for detecting a special operating state (8) of a motor vehicle (1) which differs from a normal operating state of the motor vehicle (1), with which a noise (4) emitted by the motor vehicle (1) during operation of the motor vehicle (1) can be captured in the interior (2) of the motor vehicle (1) using the mobile apparatus (3) which is separate from the motor vehicle (1), and the noise (4) can be compared with a plurality of reference noises (7) provided by the mobile apparatus (3), the noise (4) being able to be assigned to a most similar reference noise of the plurality of reference noises (7) on the basis of the comparison if a minimum similarity value is exceeded, and the special operating state (8) being able to be detected by the assignment which has been carried out, a defective component (6) of the motor vehicle (1) being determined by means of an assignment between the defective component (6) and the plurality of reference noises (7),
**characterized in that**
the mobile apparatus is configured to determine a workshop proposal (25) for the motor vehicle (1) by means of an assignment between the workshop proposal (25) and the plurality of reference noises (7).

9. Computer program product (23) comprising instructions which cause the apparatus of Claim 8 to carry out the method steps according to one of Claims 1 to 7.

## Revendications

1. Procédé de détection d'un état de fonctionnement particulier (8) du véhicule automobile (1) qui s'écarte d'un état de fonctionnement normal d'un véhicule automobile (1), procédé dans lequel un bruit (4), émis par le véhicule automobile (1) pendant le fonctionnement du véhicule automobile (1), est détecté dans l'espace intérieur (2) du véhicule automobile (1) au moyen d'un dispositif mobile (3) séparé du véhicule automobile (1) et dans lequel le bruit (4) est comparé à une pluralité de bruits de référence (7) produits par le dispositif mobile (3), le bruit (4) étant associé à un bruit de référence le plus similaire de la pluralité de bruits de référence (7) sur la base de la comparaison lorsqu'une valeur de similitude minimale est dépassée et l'état de fonctionnement particulier (8) étant détecté par l'association effectuée, un composant défectueux (6) du véhicule automobile (1) étant déterminé au moyen d'une association entre le composant défectueux (6) et la pluralité des bruits de référence (7), **caractérisé en ce que**
une suggestion d'atelier (25) pour le véhicule automobile (1) est déterminée au moyen d'une association entre la suggestion d'atelier (25) et la pluralité de bruits de référence (7).

2. Procédé selon la revendication 1,
**caractérisé en ce que**
au moins un état (10) du véhicule automobile (1) est déterminé sur la base d'un bus de communication (9) du véhicule automobile (1) et la pluralité des bruits de référence (7) produits par le dispositif mobile (3) est sélectionnée en fonction d'une association entre l'état (10) et la pluralité de bruits de référence (7).

3. Procédé selon l'une des revendications précédentes,
**caractérisé en ce que**
le bruit (4) est éliminé d'un bruit normal caractérisant l'état de fonctionnement normal et le bruit éliminé est comparé à la pluralité des bruits de référence (7).

4. Procédé selon l'une des revendications précédentes,
**caractérisé en ce que**
une position (13) du dispositif mobile (3) dans l'espace intérieur (2) par rapport au véhicule automobile (1) et une distance (14) de la source (5) du bruit (4) à la position (13) du dispositif mobile (3) est déterminée et/ou une orientation (15) de la source (5) du bruit (4) par rapport au dispositif mobile (3) est déterminée dans l'espace intérieur (2), et une position (16) de la source (5) est déterminée en fonction de la distance (14) et/ou de l'orientation (15), le bruit (4) de la pluralité de bruits de référence (7) étant associé au véhicule automobile (1) en fonction de la position (16) de la source (5) .

5. Procédé selon l'une des revendications précédentes,
**caractérisé en ce que**
une valeur d'accélération actuelle du dispositif mobile (3) est acquise pendant la détection du bruit (4) et le bruit (4) est associé à la pluralité de bruits de référence (7) en fonction de la valeur d'accélération actuelle.

6. Procédé selon l'une des revendications précédentes,
**caractérisé en ce que**
une situation environnementale actuelle (11) du véhicule automobile (1) est détectée pendant la détection du bruit (4) et le bruit (4) est associé à la pluralité de bruits de référence (7) en fonction de la situation environnementale actuelle (11).

7. Procédé selon l'une des revendications précédentes,
**caractérisé en ce que**
le bruit (4) est enregistré, en particulier conjointement avec l'information de fonctionnement du véhicule automobile (1), par le dispositif mobile (3) et est produit comme bruit de référence de la pluralité de bruits de référence (7).

8. Dispositif mobile (3) de détection d'un état de fonctionnement particulier (8) du véhicule automobile (1) qui s'écarte d'un état de fonctionnement normal d'un véhicule automobile (1), un bruit (4), émis par le véhicule automobile (1) lors du fonctionnement du véhicule automobile (1), pouvant être détecté dans l'espace intérieur (2) du véhicule automobile (1) au moyen du dispositif mobile (3) séparé du véhicule automobile (1) et le bruit (4) pouvant être comparé à une pluralité de bruits de référence (7) produits par le dispositif mobile (3), le bruit (4) pouvant être associé, lorsqu'une valeur de similitude minimale est dépassée, à un bruit de référence le plus similaire de la pluralité de bruits de référence (7) sur la base de la comparaison et l'état de fonctionnement particulier (8) pouvant être détecté par l'association effectuée, un composant défectueux (6) du véhicule automobile (1) étant déterminé au moyen d'une association entre le composant défectueux (6) et la pluralité de bruits de référence (7),
**caractérisé en ce que**
le dispositif mobile est conçu pour déterminer une suggestion d'atelier (25) pour le véhicule automobile (1) au moyen d'une association entre la suggestion d'atelier (25) et la pluralité de bruits de référence (7).

9. Progiciel (23) comprenant des instructions qui amènent le dispositif selon la revendication 8 à réaliser les étapes de procédé selon l'une des revendications 1 à 7.
